# EUROPEAN PATENT SPECIFICATION

(11) **EP 0 693 598 B1**
(45) Date of publication and mention of the grant of the patent: **22.03.2000**
(21) Application number: 95305137.2
(22) Date of filing: 21.07.1995
(51) Int. Cl.: E04C 2/26, B29C 33/10, E04C 2/292

(54) **Method of and apparatus for making a "sandwich" building panel**
Verfahren und Gerät zur Herstellung eines Sandwich-Paneeles
Procédé et appareil pour réaliser un panneau sandwich

(30) Priority: 21.07.1994 GB 9414708
(43) Date of publication of application: 24.01.1996
(73) Proprietor: PORTAKABIN LIMITED, Huntington York Y03 9PT (GB)
(72) Inventor: Botham, Stephen Charles, Stockton on the Forest, York YO3 9UT (GB); Hoggarth, Christopher John, Huntington, York YO3 9RQ (GB)
(74) Representative: Leach, John Nigel

(56) References cited:
- EP-A- 0 388 279
- GB-A- 2 119 700
- GB-A- 2 221 644
- GB-A- 2 242 644
- US-A- 4 257 150
- US-A- 4 490 317
- US-A- 4 505 082

## Description

This invention relates to a method of and apparatus for making a building panel of the kind specified. In this specification a building panel of the kind specified comprises inner and outer skins, which, together with frame members disposed between the skins, define a chamber which contains an infilling comprising a rigid foam expanded plastics material to provide a structural sandwich in which the inner and outer skins sandwich therebetween and are bonded to the infilling.

A rigid foam expanded plastics material infill is made by the introduction of pockets or cells of gas into the plastics material when in a fluid state and which lead to pockets or cells of gas in the rigid material after it has set. It is necessary to provide a passage for egress of air displaced on feeding of the fluid infill material into the chamber defined by the frame members and the inner and outer skins.

However, the provision of an air release passage would permit egress of the infill material whilst in fluid state. Since the density of the infill is dependent upon the amount of material introduced into the chamber and hence the pressure to which it is subjected during solidification, the density cannot be controlled if free egress of the infill material were permitted.

Such a building panel has comprised a wall panel and the frame has comprised relatively wide timber peripheral frame members and so the air release passage is relatively long. Consequently, by providing a suitably small cross-sectional area which, whilst being sufficiently large to permit the desired air release, a desired restriction to egress of the infill material can be achieved due to the time taken for the material to progress along the air release passage.

However, if the frame member provided with the air release passage is relatively thin, for example by virtue of being made of a metal section such as a channel section, the air release passage is insufficiently long for there to be an adequate restriction to infill material egress, whilst permitting a cross-sectional area sufficiently large to permit the desired release of air. It is known from GB-A-2119700 to provide a tube in a gasket sealing a mould to permit venting of the mould. A stress-skin foam filled building panel is known from US-A-4490317 which discussed using nozzles attached to a variable boom to supply a foam precursor composition to the internal cavity of the building panel.

An object of the invention is to provide a method of and apparatus for making a building panel of the kind specified whereby the above mentioned problem is overcome or is reduced.

According to a first aspect of the invention we provide a method of making a building panel of the kind specified comprising the steps of introducing a rigid foam expanded plastics material precursor in fluid state into a chamber defined between the frame members and the inner and outer skins and wherein one of the frame members has an air release tube mounted in an opening therein, the air release tube having a passage extending between an entry end disposed in connection with the chamber and an exit end disposed outwardly of the one frame member, the portion of the frame member in which the opening is provided being relatively thin, as herein defined.

The frame member may have a channel shape formation comprising two spaced limbs defining an open mouth therebetween at their one ends and interconnected by a transversely extending web and the air release tube being mounted in an opening in the web and extending away from the web to the exit end disposed outwardly of said open mouth.

The method may include the step of severing a spout part of the air release tube from a mounting part thereof which is mounted and retained in said opening and preferably by severing along a region of weakness of the air release tube.

The severing step may be performed after the expanded plastics material has become rigid.

The method may include the step of inserting the air release tube into said opening from the interior of the chamber and preferably until an abutment part of the mounting part engages a surface of the frame member surrounding the opening.

By "relatively thin" we mean less than 20mm.

The length of the passage in the air release tube between the entry end and the exit end may be "relatively long" and/or "relatively narrow".

By "relatively long" we mean 75mm - 100mm, preferably about 85mm.

By "relatively narrow" we mean 10-12mm diameter at the entry end and 9-7mm diameter at the exit end, and preferably 12mm diameter at the entry end and 8mm diameter at the exit end.

According to a second aspect of the invention we provide an apparatus for making a wall panel of the kind specified comprising an air release tube having a mounting part adapted to be received in an opening of a frame member and a spout part extending away from the mounting part to an exit end.

A region of weakness may be provided between the mounting part and the spout part to facilitate severance of the spout part from the mounting part.

The region of weakness may comprise a relatively thin region of the wall of the tube.

The relatively thin region may comprise a groove in the external surface of the wall, which groove may be of "V"-section.

The mounting part may have an abutment portion for engagement with a surface of the frame member around the opening.

The abutment portion may comprise a radially outwardly extending flange which may be of annular configuration.

The spout part may be provided with an internal wall of tapered configuration which converges in the direction away from the mounting part.

The mounting part may have an internal wall which is a continuation of the internal wall of the spout part.

At the exit end the spout part may be provided with an opening which is directed transversely to the longitudinal extent of the air release tube and preferably generally perpendicular to the longitudinal axis thereof.

The air release tube may be of generally constant wall thickness throughout its extent, except for the region of weakness and at the exit end.

The air release tube may be made as an injection moulding in a suitable plastics material such as polystyrene. The air release tube may have a diameter of 10-12mm and preferably 12mm at the entry to the mounting part and may have a minimum diameter upstream of the exit end of 9-7mm and preferably 8mm.

According to the invention we provide a building panel when made by a method according to the first aspect of the invention or using an apparatus according to the second aspect of the invention.

The building panel may comprise a wall panel or a floor panel, or a roof panel.

Embodiments of the invention will now be described with reference to the accompanying drawings, wherein:
FIGURE 1 is an elevation of a wall panel for the building unit with an outer skin omitted but with the position occupied by its periphery shown in dashed line;
FIGURE 2 is a section on the line 2-2 of Figure 1;
FIGURE 3 is a section on the line 3-3 of Figure 1;
FIGURE 4 is an elevation similar to that of Figure 1, but of an alternative wall panel;
FIGURE 5 is a section on the line 5-5 of Figure 4;

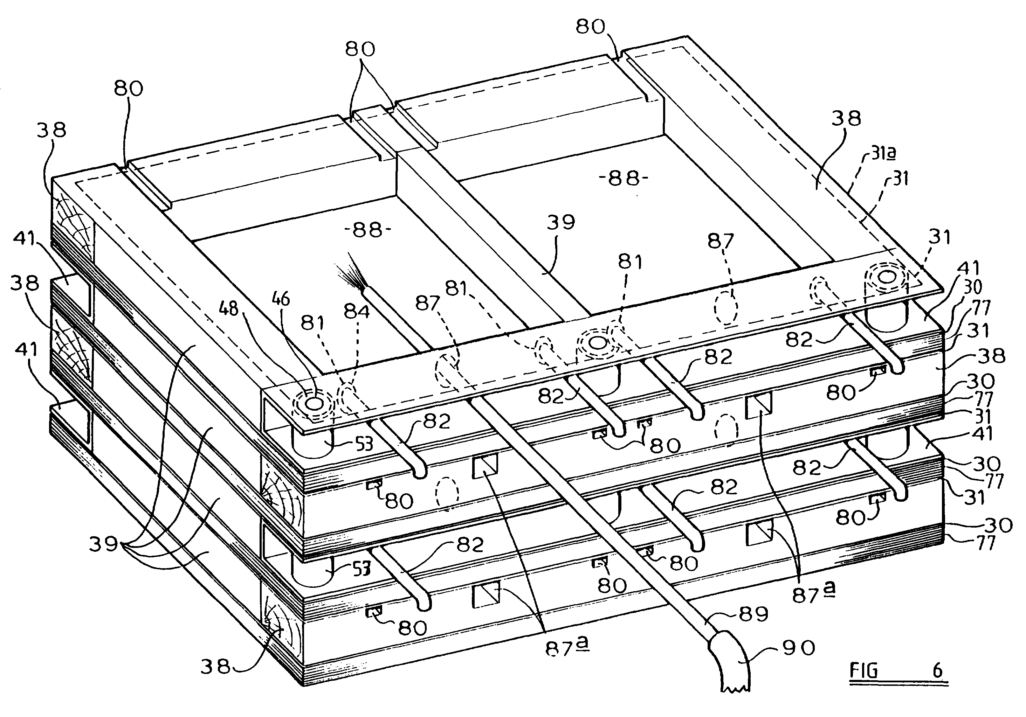

FIGURE 6 is a perspective view, with parts omitted, showing an apparatus for making wall panels embodying the invention;
FIGURE 7 is a fragmentary cross-section through part of the apparatus of Figure 6 showing the clipping of a channel shape element to a platen.
FIGURE 8 is a side elevation of an air release tube used in the apparatus of Figure 6;
FIGURE 9 is an end view of the air release tube of Figure 8, and
FIGURE 10 is an underneath plan view of the air release tube of Figure 8.

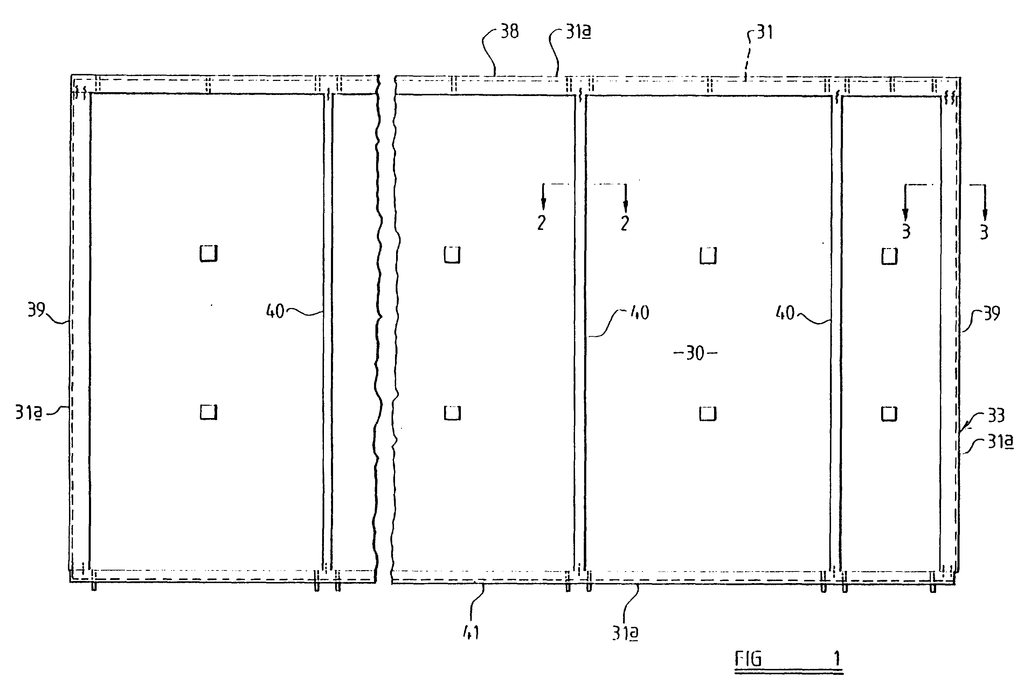

A panel for use in a portable building unit comprises a stressed skin structural sandwich of inner and outer skins 30, 31 which are sandwiched between and bonded together by means of a polyurethane foam 32 (Figs. 1 to 3). In addition a peripheral frame 33 is provided between the inner and outer skins. In the present example the outer skin 31 comprises a coloured steel cladding, for example, galvanised steel sheet having a coloured PVC coating on the external surface to give a long and maintenance free life. The outer skin 31 is made up of a plurality of such galvanised steel sheets 37 which, as best shown in Figure 2, are seamed vertically with one sheet being formed with a wider flange 34 at one edge and a narrower flange 35 at the other edge. The joint is formed by folding the free marginal portion 36 of the wider flange 34 around the free edge of the narrower flange 35 to lie in face-to-face relation with the adjacent portion of the latter on the side thereof remote from the remainder of the wider flange. The folded over portion of the two flanges may then, if desired, be further folded over as a whole through 180° to form a joint having five thicknesses of metal with the marginal edged portion 36 of the wider flange sandwiched between portions of the narrower flange and with such three layer portion itself sandwiched between portions of the wider flange. Such a joint can be formed by rolling in two successive operations, if desired. However, the panels 38 may be interconnected by other configurations of interconnected flanges such as by clipping together equal length upstanding flanges or otherwise securing flanges together, or indeed the sheets may be secured together in any other desired convenient manner.

The internal skin 30 is made of galvanised steel sheet with a polyester powder coating or of a gypsum wall board, but may be made of any other desired material.

The polyurethane foam is 47mm thick which gives good thermal insulation and securely bonds the sheets together.

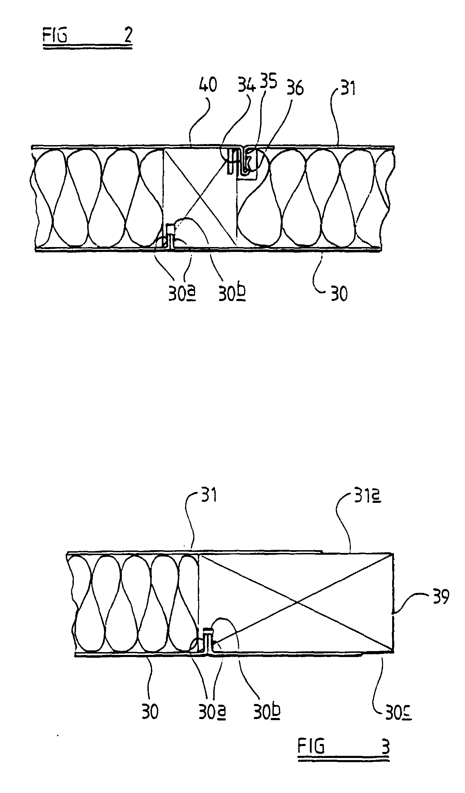

As shown in Figure 1, the peripheral frame 33 comprises an upper member 38 and end vertical members 39. In addition, intermediate vertical members are provided as shown at 40. As best shown in Figures 2 and 3, the intermediate members are provided adjacent the seams between the sheets 37, the number and positioning of the intermediate members 40 and the sizes of the sheets 37 being chosen in accordance with the overall size of the particular panel desired and the available maximum width of the sheets 37. The inner skin 30 is also provided with inwardly directed flanges shown at 30a in Figures 2 and 3 and these are received in a slot 30b provided in the intermediate frame member 40 and also in a peripheral frame member 39. It will be seen that the sheets 37 of the inner and outer skins overlie the majority of the extent of the peripheral frame member but leave a small portion 30c, 31a of the peripheral frame members exposed respectively.

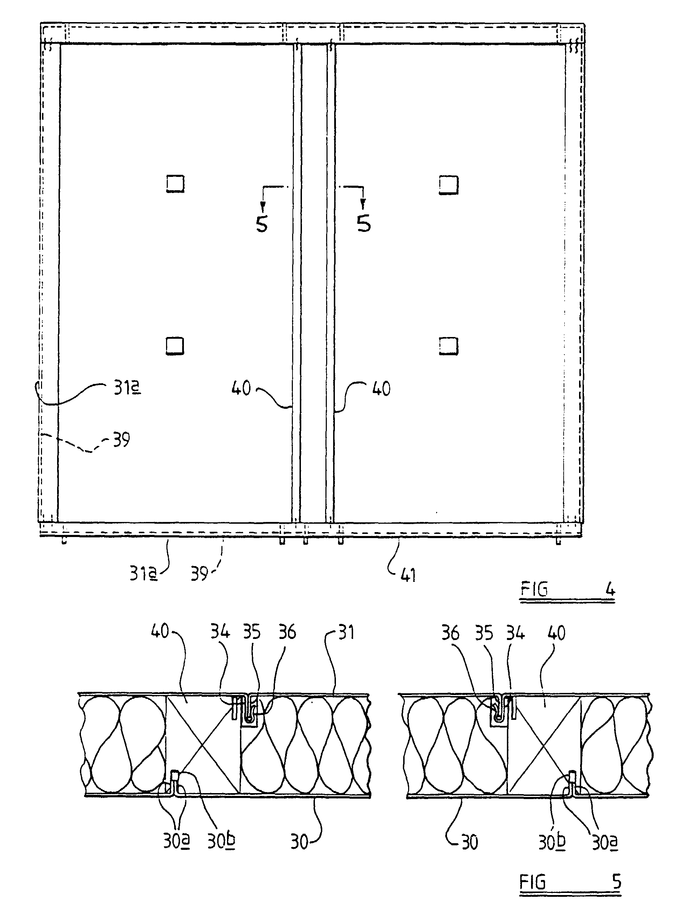

Figures 4 and 5 show an example of an alternative configuration of panel and hence the same reference numerals have been used to refer to corresponding parts.

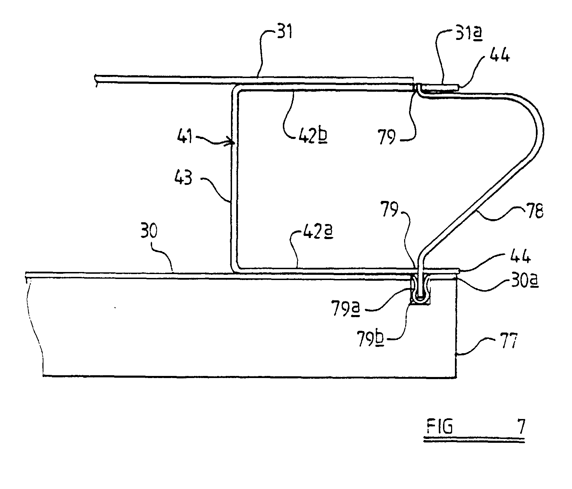

The frame 33 also has a bottom member 41 which comprises a channel shaped element made, in the present example, of galvanised cold rolled steel, as shown in Figure 7, and comprises spaced generally parallel inner and outer limbs 42a, 42b which define an open mouth between their one ends 44 and which are interconnected at their other ends by a transversely extending web 43. The channel is disposed so that the web 43 is disposed inwardly of the panel whilst the one ends 44 of the limbs are disposed facing downwardly. The panels 31 of the outer skin overlie an upper part of the outer limb 42b, to leave a lower part exposed, as shown at 31a, whilst the panels of the inner skin overlie the inner limb 42a to leave a lower part exposed, as shown at 30a.

The inner and outer limbs 42a, 42b have an inwardly deformed formation which is of frusto-conical configuration providing an aperture 46 and a recess or countersink 48.

A cylindrical bracing element 53 is disposed between the limbs 42a, 42b and during assembly is retained theredisposed by the inwardly formations deformed.

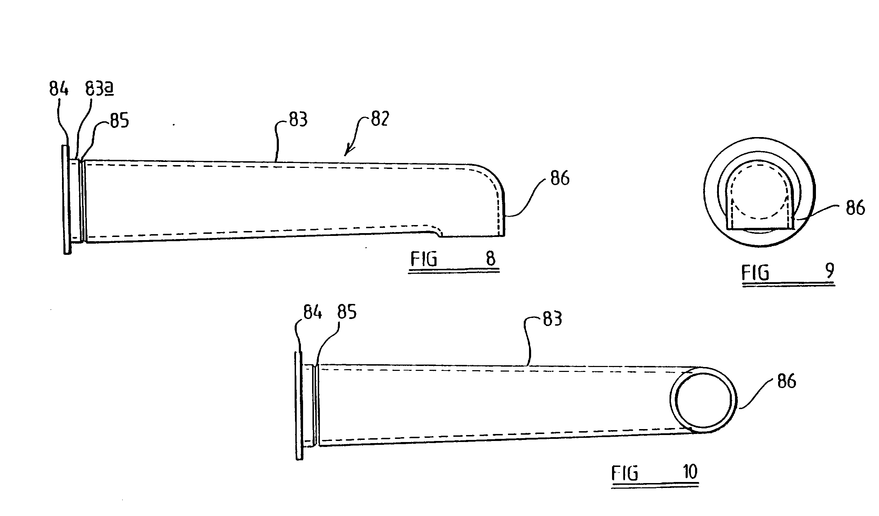

The element 41 is connected by wood screws to the other frame members 38, 39 and 40 and the inner and outer skins 30, 31 are assembled on opposite sides of the resultant frame and a plurality of such frames and sheets are assembled in a stack, as illustrated in Figure 8. It will be seen from Figure 8 that the upper and lower frame members 38, 41 are disposed alternately at opposite ends of the stack. As best shown in Figure 9, each channel shape element 41 is clipped to a platen 77 by clips 78 which engage with slots 79 formed in the limbs 42a, 42b of the element 41 as well as in a groove 79a of the platen 77 which contains a spring clip 79b so that the element 41 is accurately positioned relative to the platen 77.

The upper frame members are provided with grooves 80 to permit egress of foam, as hereinafter to be described, whilst the web part 43 of the channel section elements 41 is provided with feed openings 87 and with circular apertures 81 in which foam ejection tubes 82 are mounted. As best shown in Figures 8-10, each foam ejection tube is of frusto-conical internal and external shape and comprises a hollow tubular spout part 83 having at one end a mounting part 83a having a radially outwardly extending generally annular flange 84 and with a reduced thickness weakened portion 85 between the mounting and spout parts. At its other end the spout part 83 has a nozzle portion 86 which extends generally perpendicularly to the spout part 83. The foam ejection tubes 82 are introduced into the apertures 81 from the interior of the frame prior to assembly with the skins 30, 31 until the flange 84 abuts the surface of the web 43. The frusto-conical external configuration of the mounting part 83a ensures that the tube is a good sealing fit with the web 43.

In use, the above described assembly is introduced into a press, not shown, and pressure is applied to the stack of components. Polyurethane foam material in fluid state is then injected into the interior of each compartment 88 between frame members of each panel by means of a lance 89 supplied with the foam material via a hose 90. As the foam material is introduced air escapes through the grooves 80 and tubes 82. When the foam material has been introduced the lance is removed and the opening provided for the lance is closed with an appropriate bung. There is a sufficient time delay between introduction of the foam material and foaming occurring to permit this operation. Subsequently, excess foam begins to escape through the grooves 80 and through the tubes 82. Because the spout part 83 of the tubes is of sufficient length to ensure that the nozzle parts 86 project outwardly beyond the open mouth of the element 41 and hence of the edge of the stack, any foam falling therefrom is guided away from the stack to avoid contamination of the components and thus avoid build-up of foam which would prevent fitting of bottom wall trims. In addition the tubes are dimensioned to limit the amount of foam which is ejected. In the illustrated example the tubes are 85mm long and have an entry end with a diameter of 12mm and an exit end with a diameter of 8mm. If desired, however, the tubes may have a length lying in the range 75mm - 100mm and may have a diameter at their entry end lying in the range 10mm - 12mm, and at their exit end lying in the range 9mm - 7mm. The dimensions, and in particular the tapered configuration, impedes the flow of foam. Accordingly, whilst air is freely released as the space within the chambers 88 is filled with foam, the rate of foam movement along the tube 82 is restricted because of the relative viscosity of the foam and dimensions of the tube so that a relatively high pressure can be built up in the chambers 88, thereby enabling a high density of foam to be achieved within the chambers 88 of the panel.

The invention may be applied to other building panels, such as a floor panel, or roof panel, or structure as described in our co-pending European patent application, EP-A-0 693 595 published on 24.01.96.

## Claims

1. A method of making a building panel comprising inner and outer skins (30, 31), which, together with frame members disposed between the skins (38, 39, 40, 41), define a chamber (88) which contains an infilling comprising a rigid foam expanded plastics material to provide a structural sandwich in which the inner and outer skins sandwich therebetween and are bonded to the infilling comprising the steps of introducing a rigid foam expanded plastics material precursor in fluid state into a chamber defined between the frame members and the inner and outer skins (30, 31) characterised in that one of the frame members (41) has an air release tube (82) mounted in an opening (81) therein, the air release tube (82) having a passage extending between an entry end disposed in connection with the chamber and an exit end disposed outwardly of the one frame member (41), the portion (43) of the frame member (41) in which the opening is provided being relatively thin.

2. A method according to claim 1 wherein the frame member (41) has a channel shape formation comprising two spaced limbs (42a, 42b) defining an open mouth therebetween at their one ends (44) and interconnected by a transversely extending web (43) and the air release tube (82) being mounted in an opening (81) in the web (43) and extending away from the web (43) to the exit end (86) disposed outwardly of said open mouth.

3. A method according to claim 1 or claim 2 wherein the method includes the step of severing a spout part (83) of the air release tube (82) from a mounting part (83a) thereof which is mounted and retained in said opening (81).

4. A method according to claim 3 including the step of severing the spout part (83) from the mounting part (83a) by severing along a region of weakness (85) of the air release tube (82).

5. A method according to claim 3 or claim 4 wherein the severing step is performed after the expanded plastics material has become rigid.

6. A method according to any one of the preceding claims including the step of inserting the air release tube (87) into said opening (41) from the interior of the chamber (88) and preferably until an abutment part (84) of the mounting part (83a) engages a surface of the frame member surrounding the opening.

7. A method according to any one of the preceding claims wherein the length of the passage in the air release tube (82) between the entry end and the exit end may be "relatively long" and/or "relatively narrow" as hereindefined.

8. An apparatus for making a building panel having inner and outer skins (30, 31), which, together with frame members disposed between the skins (38, 39, 40, 41), define a chamber (88) which contains an infilling comprising a rigid foam expanded plastics material to provide a structural sandwich in which the inner and outer skins sandwich therebetween and are bonded to the infilling, the apparatus comprising an air release tube (82) having a mounting part (83b) adapted to be received in an opening (81) of a frame member (41) and a spout part (83) extending away from the mounting part (83a) to an exit end.

9. An apparatus according to claim 8 wherein a region of weakness (85) is provided between the mounting part (83a) and the spout part (83) to facilitate severance of the spout part (83) from the mounting part (83a).

10. An apparatus according to claim 9 wherein the region of weakness (85) comprises a relatively thin region of the wall of the tube (82).

11. An apparatus according to claim 10 wherein the relatively thin region comprises a groove in the external surface of the wall.

12. An apparatus according to any one of claims 8 to 11 wherein the mounting part (83a) has an abutment portion for engagement with a surface of the frame member (41) around the opening.

13. An apparatus according to claim 12 wherein the abutment portion comprises a radially outwardly extending flange (84) which may be of annular configuration.

14. An apparatus according to any one of claims 8 to 13 wherein the spout part (83) is provided with an internal wall of tapered configuration which converges in the direction away from the mounting part (83a).

15. An apparatus according to any one of claims 8 to 14 wherein the mounting part (83a) has an internal wall which is a continuation of the internal wall of the spout part (83).

16. An apparatus according to any one of claims 8 to 15 wherein at the exit end the spout part (83) is provided with an opening which is directed transversely to the longitudinal extent of the air release tube (82).

17. An apparatus according to claim 16 when the opening is directed generally perpendicular to the longitudinal axis of the air release tube (82).

18. An apparatus according to any one of claims 8 to 17 wherein the air release tube (82) is of generally constant wall thickness throughout its extent, except for the region of weakness (85) and at the exit end.

19. An apparatus according to any one of claims 8 to 18 wherein the air release tube (82) is made as an injection moulding in a suitable plastics material such as polystyrene.

20. An apparatus according to any one of claims 8 to 19 wherein the air release tube (82) has a diameter of 10-12mm at the entry to the mounting part and/or a minimum diameter upstream of the exit end of 9-7mm.

## Patentansprüche

1. Verfahren zum Herstellen einer Gebäude-Wandtafel mit Innen- und Außenplatten (30, 31), die zusammen mit zwischen den Platten angeordneten Rahmenelementen (38, 39 40, 41) eine Kammer (88) bilden, die eine Füllung enthält, die aus expandiertem, starrem Schaumkunststoffmaterial besteht, um ein strukturelles Sandwichelement zu bilden, in dem die Innen- und Außenplatten die Füllung sandwichartig umschließen und damit verbunden sind, mit den Schritten, ein Vorläufermaterial eines expandierten, starren Schaumkunststoffmaterials in flüssigem Zustand in eine zwischen den Rahmenelementen und den Innen- und Außenplatten (30, 31) gebildete Kammer einzuleiten, dadurch gekennzeichnet, daß eines der Rahmenelemente (41) ein Luftablaßrohr (82) aufweist, das in einer Öffnung (81) davon angeordnet ist, wobei das Luftablaßrohr (82) einen Durchgang aufweist, der sich zwischen einem Eingangsende, das in Verbindung mit der Kammer angeordnet ist, und einem Ausgangsende, das außerhalb des einen Rahmenelements (41) angeordnet ist, erstreckt, wobei der Abschnitt (43) des Rahmenelements (41), in dem die Öffnung angeordnet ist, relativ dünn ist.

2. Verfahren nach Anspruch 1, dadurch gekennzeichnet, daß das Rahmenelement (41) eine U-förmige Gestalt aufweist, mit zwei beabstandeten Schenkeln (42a, 42b), die dazwischen an ihren einen Enden (44) eine offene Mündung festlegen und durch einen querverlaufenden Abschnitt (43) miteinander verbunden sind, wobei das Luftablaßrohr (82) in einer Öffnung (81) in dem Abschnitt (43) angeordnet ist und sich von dem Abschnitt (43) zu dem außerhalb der offenen Mündung angeordneten Ausgangsende weg erstreckt.

3. Verfahren nach Anspruch 1 oder 2, dadurch gekennzeichnet, daß das Verfahren den Schritt umfaßt, daß ein Mündungsabschnitt (83) des Luftablaßrohrs (82) von einem Befestigungsabschnitt (83a) davon, der in der Öffnung (81) angebracht und gehalten ist, abgetrennt wird.

4. Verfahren nach Anspruch 3, gekennzeichnet durch den Schritt, daß der Mündungsabschnitt (83) von dem Befestigungsabschnitt (83a) dadurch abgetrennt wird, daß das Abtrennen entlang eines Schwächungsbereichs (85) des Luftablaßrohrs (82) erfolgt.

5. Verfahren nach Anspruch 3 oder 4, dadurch gekennzeichnet, daß der Abtrennungsschritt erfolgt, nachdem das expandierte Kunststoffmaterial erstarrt ist.

6. Verfahren nach einem der vorangehenden Ansprüche, gekennzeichnet durch den Schritt, daß das Luftablaßrohr (87) in die Öffnung (41) vom Inneren der Kammer (88) eingesetzt wird, und vorzugsweise bis ein Anschlagabschnitt (84) des Befestigungsabschnitts (83a) mit einer Oberfläche des Rahmenelements zusammenwirkt, die die Öffnung umgibt.

7. Verfahren nach einem der vorangehenden Ansprüche, dadurch gekennzeichnet, daß die Länge des Durchgangs in dem Luftablaßrohr (82) zwischen dem Eintrittsende und dem Austrittsende "relativ lang" und/oder "relativ eng" sein kann, wie hierin festgelegt.

8. Vorrichtung zum Herstellen einer Gebäude-Wandtafel mit Innen- und Außenplatten (30, 31), die gemeinsam mit Rahmenelementen (38, 39, 40, 41), die zwischen den Platten angeordnet sind, eine Kammer (88) festlegen, die eine Füllung enthält, welche aus expandiertem steifen Schaumkunststoffmaterial besteht, um ein strukturelles Sandwichelement zu bilden, in dem die Innen- und Außenplatten die Füllung dazwischen sandwichartig umgeben und damit verbunden sind, wobei die Vorrichtung ein Luftablaßrohr (82) mit einem Befestigungsabschnitt (83b) umfaßt, das dazu bestimmt ist, in einer Öffnung (81) eines Rahmenelements (41) aufgenommen zu werden, wobei sich ein Mündungsabschnitt (83) von dem Befestigungsabschnitt (83a) zu einem Austrittsende weg erstreckt.

9. Vorrichtung nach Anspruch 8, dadurch gekennzeichnet, daß ein Schwächungsbereich (85) zwischen dem Befestigungsabschnitt (83a) und dem Mündungsabschnitt (83) vorgesehen ist, um das Abtrennen des Mündungsabschnitts (83) von den Befestigungsabschnitt (83a) zu erleichtern.

10. Vorrichtung nach Anspruch 9, dadurch gekennzeichnet, daß der Schwächungsbereich (85) aus einem relativ dünnen Bereich der Wand des Rohrs (82) besteht.

11. Vorrichtung nach Anspruch 10, dadurch gekennzeichnet, daß der relativ dünne Bereich aus einer Nut in der äußeren Oberfläche der Wand besteht.

12. Vorrichtung nach einem der Ansprüche 8 bis 11, dadurch gekennzeichnet, daß der Befestigungsabschnitt (83a) einen Anschlagbereich zum Zusammenwirken mit einer Oberfläche des Rahmenelements (41) um die Öffnung herum aufweist.

13. Vorrichtung nach Anspruch 12, dadurch gekennzeichnet, daß der Anschlagbereich einen sich radial auswärts erstreckenden Flansch (84) aufweist, der ringförmig sein kann.

14. Vorrichtung nach einem der Ansprüche 8 bis 13, dadurch gekennzeichnet, daß der Mündungsabschnitt (83) mit einer Innenwand konisch zulaufender Form versehen ist, die in einer Richtung weg von dem Befestigungsabschnitt (83a) konvergiert.

15. Vorrichtung nach einem Ansprüche 8 bis 14, dadurch gekennzeichnet, daß der Befestigungsabschnitt (83a) eine Innenwand aufweist, die eine Fortsetzung der Innenwand des Mündungsabschnitts (83) ist.

16. Vorrichtung nach einem der Ansprüche 8 bis 15, dadurch gekennzeichnet, daß der Mündungsabschnitt (83) am Austrittsende mit einer Öffnung versehen ist, die quer zur Längserstreckung des Luftablaßrohrs (82) gerichtet ist.

17. Vorrichtung nach Anspruch 16, dadurch gekennzeichnet, daß die Öffnung im wesenlichen senkrecht zur Längsachse des Luftablaßrohrs (82) gerichtet ist.

18. Vorrichtung nach einem der Ansprüche 1 bis 17, dadurch gekennzeichnet, daß das Luftablaßrohr (82) eine über seine Erstreckung im wesentlichen konstante Wanddicke aufweist, mit Ausnahme des Schwächungsbereichs (85) und am Austrittsende.

19. Vorrichtung nach einem der Ansprüche 8 bis 18, dadurch gekennzeichnet, daß das Luftablaßrohr (82) als Spritzgußteil aus einem geeigneten Kunststoffmaterial, wie beispielsweise Polystyren, hergestellt ist.

20. Vorrichtung nach einem der Ansprüche 8 bis 19, dadurch gekennzeichnet, daß das Luftablaßrohr (82) einen Durchmesser von 10 bis 12 mm am Eintritt in den Befestigungsabschnitt und/oder einen minimalen Durchmesser oberhalb des Austrittsendes von 9 bis 7 mm aufweist.

## Revendications

1. Procédé de fabrication d'un panneau de construction comprenant des peaux intérieure et extérieure (30, 31) qui, conjointement avec des éléments formant cadre (38, 39, 40, 41) disposés entre les peaux définissent une chambre (88) qui contient une matière de remplissage comprenant de la matière plastique rigide à base de mousse expansée pour réaliser un sandwich structurel dans lequel les peaux intérieure et extérieure prennent en sandwich, entre elles, la matière de remplissage et sont collées à celle-ci, comprenant les étapes d'introduction d'un précurseur de matière plastique rigide à base de mousse expansée à l'état fluide dans une chambre définie entre les éléments formant cadre et les peaux intérieure et extérieure (30, 31), caractérisé en ce que l'un des éléments (41) formant cadre possède un tube (82) d'échappement d'air monté dans une ouverture (81), le tube (82) d'échappement d'air comportant un conduit s'étendant entre une extrémité d'entrée disposée en correspondance avec la chambre et une extrémité de sortie disposée à l'extérieur dudit élément (41) formant cadre, la partie (43) de l'élément (41) formant cadre dans lequel est disposée l'ouverture étant relativement mince.

2. Procédé selon la revendication 1, dans lequel l'élément (41) formant cadre a une forme de canal comprenant deux branches (42a, 42b) définissant, entre elles, une embouchure ouverte au niveau de leurs extrémités (44) et qui sont reliées par une bande s'étendant transversalement (43), et dans lequel le tube (82) d'échappement d'air est monté dans une ouverture (81) dans la bande (43) et s'étend à l'écart de la bande (43) vers l'extrémité (86) de sortie disposée à l'extérieur de ladite embouchure ouverte.

3. Procédé selon la revendication 1 ou la revendication 2, dans lequel le procédé comprend l'étape de séparation d'une partie (83) formant goulotte du tube (82) d'échappement d'air de sa partie (83a) de montage qui est montée et maintenue dans ladite ouverture (81).

4. Procédé selon la revendication 3, comprenant l'étape de séparation de la partie (83) formant goulotte de la partie (83a) de montage par séparation le long d'une région affaiblie (85) du tube (82) d'échappement d'air.

5. Procédé selon la revendication 3 ou la revendication 4, dans lequel l'étape de séparation s'effectue après durcissement de la matière plastique expansée.

6. Procédé selon l'une quelconque des revendications précédentes, comprenant l'étape d'introduction du tube (87) d'échappement d'air dans ladite ouverture (41) depuis l'intérieur de la chambre (88) et, de préférence, jusqu'à ce qu'un élément (84) de butée de la partie (83a) de montage coopère avec une surface de l'élément formant cadre entourant l'ouverture.

7. Procédé selon l'une quelconque des revendications précédentes, dans lequel la longueur du conduit du tube (82) d'échappement d'air entre l'extrémité d'entrée et l'extrémité de sortie peut être "relativement longue" et/ou "relativement étroite" comme défini ici.

8. Appareil pour la fabrication d'un panneau de construction comportant des peaux intérieure et extérieure (30, 31) qui, conjointement avec des éléments formant cadre (38, 39, 40, 41) disposés entre les peaux définissent une chambre (88) qui contient une matière de remplissage comprenant une matière plastique rigide à base de mousse expansée pour fournir un sandwich structurel dans lequel les peaux intérieure et extérieure prennent en sandwich, entre elles, la matière de remplissage et sont liées à celle-ci, l'appareil comprenant un tube (82) d'échappement d'air comportant une partie (83b) de montage apte à être reçue dans une ouverture (81) d'un élément (41) formant cadre et une partie (83) formant goulotte s'étendant à l'écart de la partie (83a) de montage vers une extrémité de sortie.

9. Appareil selon la revendication 8, dans lequel une région affaiblie (85) est prévue entre la partie (83a) de montage et la partie (83) formant goulotte pour faciliter la séparation de la partie (83) formant goulotte de la partie (83a) de montage.

10. Appareil selon la revendication 9, dans lequel la région affaiblie (85) comprend une région relativement mince de la paroi du tube (82).

11. Appareil selon la revendication 10, dans lequel la région relativement mince comprend une rainure dans la surface extérieure de la paroi.

12. Appareil selon l'une quelconque des revendications 8 à 11, dans lequel la partie (83a) de montage comporte une partie de butée pour coopération avec une surface de l'élément (41) formant cadre autour de l'ouverture.

13. Appareil selon la revendication 12, dans lequel la partie de butée comprend un rebord (84) s'étendant radialement vers l'extérieur qui peut avoir une configuration annulaire.

14. Appareil selon l'une quelconque des revendications 8 à 13, dans lequel la partie (83) formant goulotte est pourvue d'une paroi intérieure de configuration conique qui converge en s'éloignant de la partie (83a) de montage.

15. Appareil selon l'une quelconque des revendications 8 à 14, dans lequel la partie (83a) de montage comporte une paroi intérieure qui est une continuité de la paroi interne de la partie (83) formant goulotte.

16. Appareil selon l'une quelconque des revendications 8 à 15, dans lequel, au niveau de l'extrémité de sortie de la partie (83) formant goulotte, est prévue une ouverture qui est dirigée transversalement à l'axe longitudinal du tube (82) d'échappement d'air.

17. Appareil selon la revendication 16, dans lequel l'ouverture est dirigée globalement perpendiculairement à l'axe longitudinal du tube (82) d'échappement d'air.

18. Appareil selon l'une quelconque des revendications 8 à 17, dans lequel le tube (82) d'échappement d'air a une épaisseur de paroi globalement constante sur toute sa longueur, excepté en ce qui concerne la région affaiblie (85) et l'extrémité de sortie.

19. Appareil selon l'une quelconque des revendications 8 à 18, dans lequel le tube (82) d'échappement d'air est réalisé par moulage par injection à partir d'une matière plastique appropriée, comme du polystyrène.

20. Appareil selon l'une quelconque des revendications 8 à 19, dans lequel le tube (82) d'échappement d'air a un diamètre de 10 à 12 mm au niveau de l'entrée de la partie de montage et/ou un diamètre minimal amont de l'extrémité de sortie de 9 à 7 mm.
